# EUROPÄISCHE PATENTSCHRIFT

(11) **EP 1 157 316 B1**
(45) Veröffentlichungstag und Bekanntmachung des Hinweises auf die Patenterteilung: **03.09.2003**
(21) Anmeldenummer: 00915138.2
(22) Anmeldetag: 02.03.2000
(51) Int. Cl.: G05B 19/409, G05B 23/02

(54) **SYSTEM UND VERFAHREN ZUR SITUATIONSGERECHTEN UNTERSTÜTZUNG DER INTERAKTION MIT HILFE VON AUGMENTED-REALITY-TECHNOLOGIEN**
SYSTEM AND METHOD FOR SITUATION-RELATED INTERACTION SUPPORT WITH THE AID OF AUGMENTED REALITY TECHNOLOGIES
SYSTEME ET PROCEDE POUR L'ASSISTANCE CONFORME A LA SITUATION DE L'INTERACTION AU MOYEN DE TECHNOLOGIES FONDEES SUR LA REALITE AMPLIFIEE

(30) Priorität: 02.03.1999 DE 19909154; 02.03.1999 DE 19909023; 02.03.1999 DE 19909018; 02.03.1999 DE 19909012; 02.03.1999 DE 19909011; 02.03.1999 DE 19909010; 02.03.1999 DE 19909013; 02.03.1999 DE 19909009; 02.03.1999 DE 19909016
(43) Veröffentlichungstag der Anmeldung: 28.11.2001
(73) Patentinhaber: SIEMENS AKTIENGESELLSCHAFT, 80333 München (DE)
(72) Erfinder: FRIEDRICH, Wolfgang, D-91088 Bubenreuth (DE); WOHLGEMUTH, Wolfgang, D-91058 Erlangen (DE)
(86) Internationale Anmeldenummer: DE0000668
(87) Internationale Veröffentlichungsnummer: WO00052541

(56) Entgegenhaltungen:
- EP-A- 0 597 127
- EP-A- 0 708 392
- DE-A- 19 716 327
- FR-A- 2 594 968
- GB-A- 2 327 289
- US-A- 5 644 493
- US-A- 5 712 649
- US-A- 5 850 352
- DAUDE R ET AL: "HEAD-MOUNTED DISPLAY ALS FACHARBEITERORIENTIERTE UNTERSTUETZUNGSKOMPONENTE AN CNC-WERKZEUGMASCHINEN" WERKSTATTSTECHNIK,DE,SPRINGER VERLAG. BERLIN, Bd. 86, Nr. 5, 1. Mai 1996 (1996-05-01), Seiten 248-252, XP000585192 ISSN: 0340-4544
- KUZUOKA H: "SPATIAL WORKSPACE COLLABORATION: A SHAREVIEW VIDEO SUPPORT SYSTEM FOR REMOTE COLLABORATION CAPABILITY" PROCEEDINGS OF THE CONFERENCE ON HUMAN FACTORS IN COMPUTING SYSTEMS,US,READING, ADDISON WESLEY, Bd. -, 1992, Seiten 533-540, XP000426833
- JOHNSON D: "SCADA SOFTWARE RAISES THE STAKES" CONTROL ENGINEERING INTERNATIONAL,US,CAHNERS PUBLISHING, Bd. 43, Nr. 14, 1. Oktober 1996 (1996-10-01), Seiten 80-82,84,86, XP000682154 ISSN: 0010-8049

## Beschreibung

Die Erfindung betrifft ein System und ein Verfahren zur Dokumentationsverarbeitung insbesondere für technische und industrielle Anwendungen.

Ein derartiges System und Verfahren kommt beispielsweise im Bereich der Automatisierungstechnik, bei Produktions- und Werkzeugmaschinen, bei Diagnose-/Serviceunterstützungssystemen sowie für komplexe Komponenten, Geräte und Systeme, wie beispielsweise Fahrzeuge und industrielle Maschinen und Anlagen zum Einsatz.

Aus der GB 2 327 289 ist eine Vorrichtung zur Arbeitsunterstützung bekannt, die einem Fließbandarbeiter mittels eines Displays gleichzeitig Instruktionen zur auszuführenden Arbeit und Informationen über Ergebnisse dieser Arbeit visualisiert. Die Arbeitsergebnisse werden durch Messmittel oder durch Eingabe einer spezifischen Teilenummer durch den Arbeiter erfasst, der Arbeitsprozess wird mit Kameras aufgenommen.

Der Erfindung liegt die Aufgabe zugrunde, ein System und ein Verfahren anzugeben, das in konkreten Arbeitssituationen einen schnellen und sicheren Zugriff auf relevante Dokumentationsdaten ermöglicht.

Diese Aufgabe wird durch ein System zur Dokumentationsverarbeitung zur situationsgerechten Unterstützung der Interaktion zwischen einem Anwender und einer technischen Vorrichtung, insbesondere für technische und industrielle Anwendungen gelöst, mit Speichermitteln zur Speicherung von Dokumentationsdaten und mit als Bildaufnahmevorrichtung ausgebildeten Erfassungsmitteln zur Erfassung von realen Informationen, mit Zugriffsmitteln zum Zugriff auf die Dokumentationsdaten und mit Auswertemitteln zur Auswertung der realen Information und zur Auswahl der gespeicherten Dokumentationsdaten in Abhängigkeit der realen Informationen.

Diese Aufgabe wird durch ein Verfahren zur Dokumentationsverarbeitung zur situationsgerechten Unterstützung der Interaktion zwischen einem Anwender und einer technischen Vorrichtung, insbesondere für technische und industrielle Anwendungen gelöst, bei dem Dokumentationsdaten gespeichert werden und reale Informationen mit als Bildaufnahmevorrichtung ausgebildeten Erfassungsmitteln erfaßt werden, bei dem auf die Dokumentationsdaten in der Weise zugegriffen wird, daß die realen Information ausgewertet werden und in Abhängigkeit der realen Informationen die gespeicherten Dokumentationsdaten ausgewählt werden.

Bei den Dokumentationsdaten kann es sich beispielsweise um bei der Errichtung einer Anlage, eines automatisierungstechnisch gesteuerten Systems oder Prozesses erstellte und gesammelte Daten und/oder auch im Betrieb einer Anlage oder eines Automatisierungssystems nach vorgebbaren Kriterien gepflegte und jeweils aktualisierte Dokumentationsdaten handeln. Diese Dokumentationsdaten können auf Speichermittel gespeichert sein, die sowohl lokal, d.h. am Ort der jeweiligen Anwendung oder auch an jedem beliebig anderen Ort, beispielsweise am Ort der jeweiligen Herstellerfirmen der einzelnen Anlagenkomponenten, gespeichert werden. Mit Hilfe der Erfassungsmittel werden beispielsweise aus einem Bildinhalt die realen Informationen erfaßt und über die Auswertemittel ausgewertet, so daß eine Zuordnung der realen Objekte zu in den Dokumentationsdaten gespeicherten Objektdaten möglich wird. Anhand der realen Informationsdaten, beispielsweise in Form eines detektierten Objekts werden dann insbesondere automatisch die zusätzlichen in dem Dokumentationsdaten enthaltenen Objektdaten ausgewählt und beispielsweise für Servicezwecke vor Ort zur Verfügung gestellt. Hierdurch wird ein situationsgerechter schneller Zugang zu den jeweils benötigten Daten ermöglicht.

Vorteilhafte Ausgestaltungen bestehen darin, daß die Dokumentationsdaten statische und/oder dynamische Informationsdaten sind. Beispiele für derartige statische Informationen sind technische Daten aus Handbüchern, Explosionszeichnungen, Wartungsanweisungen etc.. Beispiele für dynamische Informationen sind Prozeßwerte wie Temperatur, Druck, Signale etc.

Ein schneller situationsgerechter Zugang zu den Dokumentationsdaten wird dadurch weiter unterstützt, daß die Erfassungsmittel eine Bildaufnahmevorrichtung aufweisen, daß die Auswertemittel zur Auswertung der realen Information in der Weise vorgesehen sind, daß aus der realen Information ein Eisatzkontext, insbesondere ein Objekt der Dokumentationsdaten ermittelt wird und daß das System Visualisierungsmittel zur Visualisierung der Dokumentationsdaten aufweist.

Ein schneller situationsgerechter Zugang zu den Dokumentationsdaten wird dadurch weiter unterstützt, daß die Erfassungsmittel anwendergesteuert sind und insbesondere als sprachgesteuerte Erfassungsmittel und/oder durch Steuerdaten gesteuerte Erfassungsmittel ausgebildet sind.

Ein für viele Anwendungsfälle optimaler Einsatz von Augmented-Reality-Techniken auf Basis der statischen und/oder dynamischen Dokumentations- und/oder Prozeßdaten kann in der Weise erfolgen, daß die Erfassungsmittel und/oder die Visualisierungsmittel als Datenbrille ausgebildet sind.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines Systems zur Dokumentationsverarbeitung,
- FIG 2: ein Blockschaltbild eines Ausführungsbeispiels eines Systems zur Dokumentationsverarbeitung,
- FIG 3: ein weiteres Blockschaltbild eines Ausführungsbeispiels eines Systems zur Dokumentationsverarbeitung und
- FIG 4: ein Anwendungsbeispiel für einen situationsgerechten Zugriff auf Dokumentationsdaten.

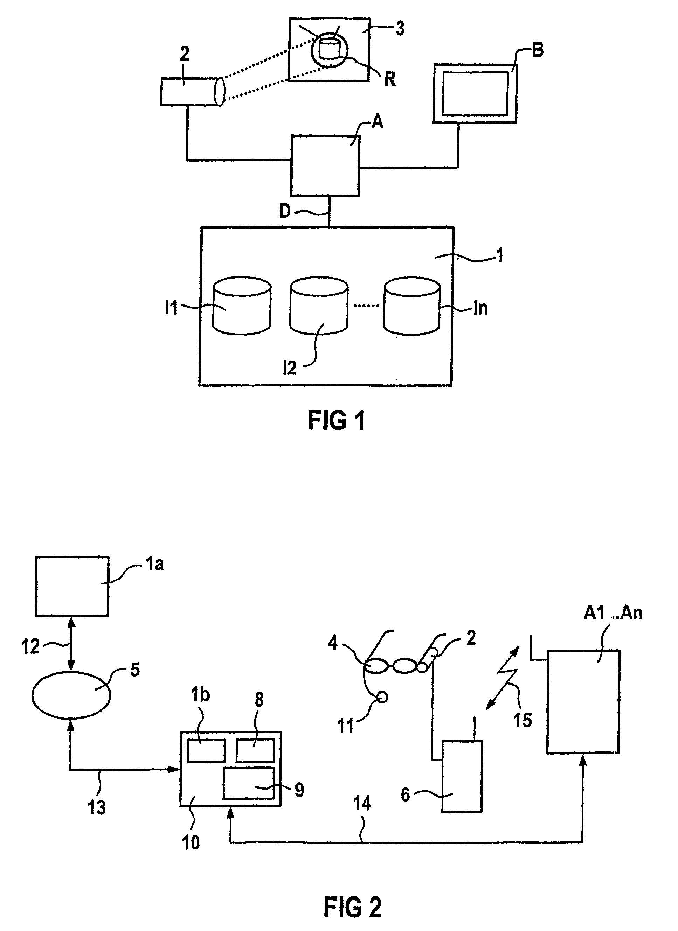

Figur 1 zeigt eine Prinzipdärstellung eines Systems zur Dokumentationsverarbeitung unter Zuhilfenahme von Augmented-Reality-Techniken. Das System besteht aus Auswertemitteln A, an die Erfassungsmittel 2 sowie Visualisierungsmittel B angeschlossen sind. Über eine Datenverbindung D sind die Auswertemittel A mit Speichermitteln 1 koppelbar. Die Speichermittel 1 enthalten Informationen I1..In als Dokumentationsdaten. Die Erfassungsmittel 2 dienen der Erfassung realer Informationen R eines Prozesses 3, beispielsweise eines Automatisierungssystems bzw. eines automatisierungstechnisch gesteuerten Systems oder Prozesses.

Figur 1 bildet die Grundstruktur eines Systems zur situationsgerechten Dokumentationsverarbeitung für technische und industrielle Anwendungen. Mit Hilfe der Erfassungsmittel 2, beispielsweise einer Videokamera werden reale Informationen der technischen und industriellen Anwendung 3 erfaßt und mit Hilfe der Auswertemittel A, beispielsweise der digitalen Bildverarbeitungsmitteln analysiert und ausgewertet. Die Auswertung der realen Informationen R mit Hilfe der Auswertemittel A erfolgt beispielsweise dahingehend, einzelne Objekte, d.h. einzelne Komponenten eines Automatisierungssystems oder einer industriellen Anwendung zu detektieren. Diese Detektion kann beispielsweise in Form von an den realen Objekten angebrachten Zusatzinformationen, beispielsweise in Form Bare-Code-Aufklebern erfolgen oder durch Vergleich der Bildinformationen mit in den Auswertemitteln A und/oder den Dokumentationsdaten 1 gespeicherten Vergleichsdaten. Nach Ermittlung eines gewünschten Objekts, welches mit der realen Information R korrespondiert, werden entweder automatisch und/oder interaktiv vom Anwender gesteuert die Dokumentationsdaten I1..In einem Anwender mit Hilfe der Visualisierungsmittel B angezeigt. Diese Dokumentationsdaten I1..In bilden eine Zusatzinformation für eine situationsgerechte Unterstützung bei der Reparatur, bei der Wartung, etc.. Abhängig von der realen Information werden jeweils die benötigten. Dokumentationsdaten situationsgerecht präsentiert. Die Dokumentationsdaten I1..In können dabei entweder vor Ort, beispielsweise auf.einer Datenverarbeitungsvorrichtung oder auch an entfernten Orten gespeichert sein, wobei in diesem Fall ein Zugriff beispielsweise über eine Internet-Anbindung erfolgt.

Figur 2 zeigt eine Prinzipdarstellung eines Systems zur Dokumentationsverarbeitung für eine situationsgerechte Unterstützung der Interaktion zwischen einem Anwender und Automatisierungseinrichtungen A1..An. Der Anwender, der in Figur 2 nicht explizit dargestellt ist, ist mit mobilen Geräten 4, 6 ausgestattet. Die mobilen Geräte 4, 6 beinhalten eine Datenbrille 4, an der ein Videokamera 2 sowie ein Mikrofon 11 angeordnet ist. Die Datenbrille ist mit einer Einrichtung zur drahtlosen Kommunikation, beispielsweise einer Funk-Sende-Empfangsvorrichtung 6 gekoppelt, die über eine Funkschnittstelle 15 mit dem Automatisierungssystem A1..An kommunizieren kann. Das Automatisierungssystem A1..An ist über eine Datenverbindung 14 mit einem Augmented-Reality-System 10 koppelbar, welches im folgenden auch abkürzend als AR-System bezeichnet wird. Das AR-System enthält ein Informationsmodul 1b zur Speicherung bzw. zum Zugriff von bzw. auf Informationsdaten, ein AR-Basismodul 8 sowie ein AR-Anwendungsmodul 9. Das AR-System 10 ist über eine Datenverbindung 13 mit dem Internet 5 verbindbar, wobei über eine beispielhaft dargestellte Internetverbindung 12 ein Zugriff auf weitere Speicher- und Dokumentationsdaten 1a möglich ist.

Der Anwender, der mit der Datenbrille 4 und der mobilen Funk-Sende-Einrichtung 7 ausgestattet ist, ist in der Lage, sich für Wartungs- und Servicezwecke in der Anlage A1..An frei zu bewegen. Ist beispielsweise die Wartung oder Reparatur einer bestimmten Teilkomponente der Anlage A1..An erforderlich, so wird mit Hilfe der Kamera 2 der Datenbrille 4 gegebenenfalls gesteuert durch Sprachkommandos, die vom Mikrofon 11 erfaßt werden, ein entsprechender Zugang zu den relevanten Dokumentationsdaten 1a, 1b hergestellt. Hierzu wird über die Funkschnittstelle 15 eine Datenverbindung zur Anlage A1..An oder einem entsprechenden Funk-Sende-Modul aufgebaut und die Daten an das AR-System 10 übermittelt. Im AR-System erfolgt eine situationsgerechte Auswertung der vom Anwender erhaltenen Daten und ein automatischer oder auch ein interaktiv vom Anwender gesteuerter Zugriff auf Inforamtionsdaten 1a, 1b. Die ermittelten relevanten Dokumentationsdaten 1a, 1b, werden über die Datenverbindungen 14, 15 an die Funk-Sende-Einrichtung 6 übermittelt und insgesamt erfolgt auf Basis der erfaßten Arbeitssituation somit eine Analyse, die Grundlage für die Auswahl von Daten aus der vorliegenden statischen Information ist. Hierdurch ergibt sich eine situationsgerechte, objektorientierte bzw. bauteilorientierte Auswahl relevanten Wissens aus den aktuellsten Datenquellen 1a, 1b. Die Anzeige der Information erfolgt mit Hilfe der jeweils verwendeten Visualisierungskomponente, beispielsweise einem Handheld-PC oder einer Datenbrille. Von AR-basierten Technologien gesprochen wird. Der Anwender vor Ort wird somit lediglich mit der Information versorgt, die er braucht. Diese Information befindet sich jeweils auf dem aktuellsten Stand. Der Servicetechniker wird beispielsweise nicht durch ein "100 Seiten-Manual" mit Informationen überfrachtet.

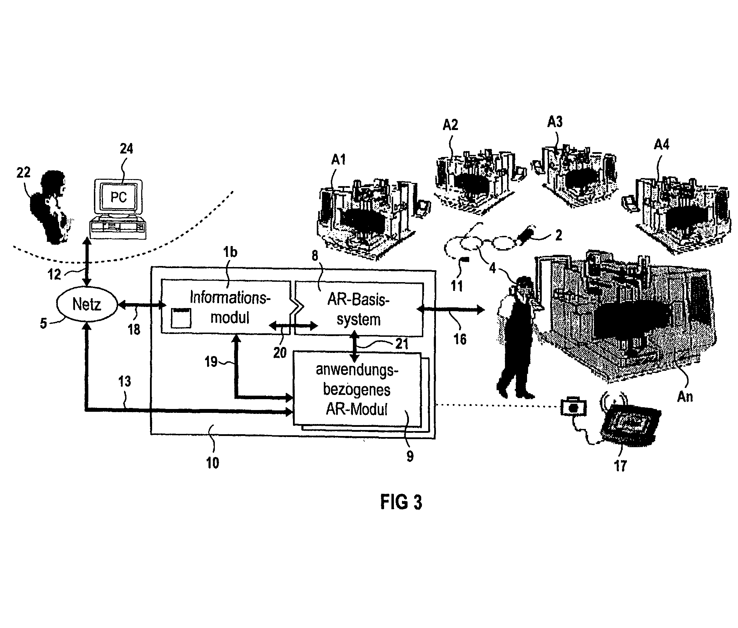

Figur 3 zeigt ein weiteres Anwendungsbeispiel eines Systems zur Dokumentationsverarbeitung für Service und Wartung. Das System besteht aus einem Augmented-Reality-System 10, welches ein Informationsmodul 1b zur Speicherung von Informationsdaten, ein AR-Basissystem 8 sowie ein AR-Anwendungsmodul 9 enthält. Das AR-System 10 ist über Bindungsleitungen 13, 18 ans Internet 5 ankoppelbar. Von dort besteht über eine beispielhafte Datenverbindung 12 eine Verbindungsmöglichkeit zu einem entfernten PC 16 mit einem entfernten Experten 22. Die Kopplung zwischen den einzelnen Modulen des AR-Systems 10 erfolgt über Verbindungen 19, 20, 21. Die Anwenderkommunikation zwischen einem Anwender 7 und dem AR-System erfolgt über Schnittstellen 8, 23. Hierzu ist das AR-System mit einer Sende-Empfangs-Vorrichtung koppelbar, die eine bidirektionale Datenkommunikation zwischen, dem AR-System 10 und dem Anwender 7 über eine Datenbrille 4 entweder direkt über die Schnittstelle 8 oder über ein im Bereich des Anwenders 7 angeordnete Funk-Sende-Empfangseinrichtung 17 über eine Schnittstelle 23 ermöglicht. Die Verbindung 23 kann über eine separate Datenverbindung oder über das Stromnetz als "Power-Line"-Modem realisiert werden. Die Datenbrille 4 enthält neben einer im Bereich der Brillengläser angeordneten Anzeigevorrichtung eine Bilderfassungsvorrichtung 2 in Form einer Kamera sowie ein Mikrofon 11. Der Anwender 7 kann sich mit Hilfe der Datenbrille 4 im Bereich der Anlagen A1..An bewegen und Service- oder Wartungsarbeiten durchführen.

Mit Hilfe der Datenbrille 4 und der entsprechenden Funk-Sende-Empfangsvorrichtungen, beispielsweise der Funk-Sende-Empfangsvorrichtung 17, die vom Personal direkt am Körper getragen wird, ist es möglich vorbeugende Funktionalität zu erreichen: Zunächst erfolgt die Erfassung der jeweiligen Arbeitssituation, beispielsweise durch die Kamera 2 oder durch Lokalisierung durch das Personal 7. Auf Basis der erfaßten Arbeitsssituation erfolgt im AR-System eine Auswahl von Daten gewarteten Anlage A1..An. Der grundlegende Vorteil des in Figur 3 dargestellten Systems besteht darin, daß dieses System das Zusammenwirken der einzelnen Einzelfunktionalitäten anwendungsgerecht unterstützt: So wird zunächst eine konkrete Arbeitssituation automatisch erfaßt, diese Arbeitssituation anschließend analysiert, wobei aus der aktuellsten, vorliegenden statischen Information in Kombination mit den augenblicklich erfaßten dynamischen Daten automatisch die gerade relevanten Aspekte ermittelt werden. Hierdurch werden beispielsweise Montagehinweise mit aktuellen Prozeßdaten korreliert. Das Personal 7 erhält hierdurch eine situationsgerechte Anzeige der relevanten Informationen beispielsweise durch eine überlagerte Visualisierung der entsprechenden Daten in der Weise, daß im Sichtfeld des Personals die reale Arbeitssituation um die ermittelten Informationen erweitert wird. Hierdurch wird das Personal 7 in kürzester Zeit handlungsfähig gemacht und damit notwendige Maschinenlaufzeiten gesichert. Unterstützung kann der Wartungstechniker 7 vor Ort auch über den entfernten Experten 22 und das am Ort des entfernten Experten 22 vorliegende Wissen 16 erhalten.

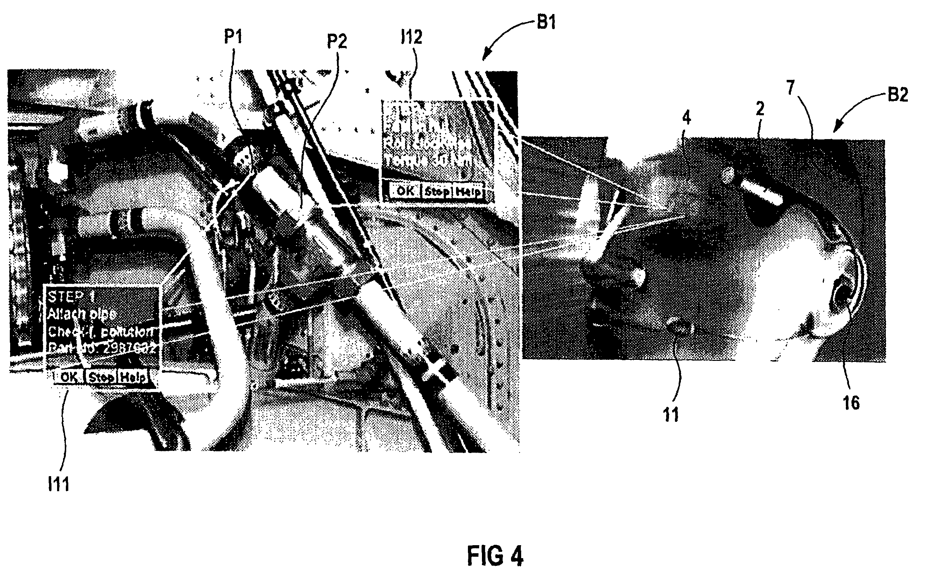

Figur 4 zeigt ein Anwendungsbeispiel für einen situationsgerechten Zugriff auf Dokumentationsdaten. Figur 4 zeigt einen ersten Bildschirmbereich B1, in dem eine Anlagenkomponente dargestellt ist. Im rechten Bildschirmbereich B2 ist ein Anwender 7 dargestellt, der beispielsweise eine einzelne Anlagenkomponente betrachtet. Der Anwender 7 ist mit einer Datenbrille 4 augerüstet, die eine Kamera 2 als Erfassungsmittel enthält. An der Datenbrille 4 ist darüber hinaus ein Mikrofon 11 sowie ein Lautsprecher 16 angeordnet. Im linken Bildschirmbereicht B1 ist ein Blick auf Rohrleitungen dargestellt, die mit der im Bildfenster B2 dargestellten Datenbrille betrachtet werden können. Im linken Bildschirmbereich B1 sind zwei Punkte B1, B2 markiert, die jeweils zwei mit Hilfe der Datenbrille 4 betrachtete Bildausschnitte repräsentieren. Nach Betrachtung des ersten Punkts P1, d.h. nach Betrachtung der im Bereich des Punktes P1 angeordneten Rohrleitung werden dem Anwender 7 Zusatzinformationen in der Daten- , brille 4 visualisiert. Diese Zusatzinformationen 11 bestehen aus Dokumentationsdaten, die bezüglich des ersten Punktes P1 Arbeitsanweisungen für dieses Rohrstück enthalten und bezüglich des Punktes P2 die in einem zweiten Schritt durchzuführende Installationsanweisung beinhalten. Die Installationsanweisung besteht in diesem Fall darin, daß dem Anwender 7 das Drehmoment und die Drehrichtung der Schraubverbindung des Punktes P2 über die Visualisierung der Zusatzdaten I12 mitgeteilt werden. Der Anwender 7 erhält somit innerhalb kürzester Zeit eine situationsgerechte Anweisung für das betrachtete Objekt. Bei der Verwendung eines intelligenten Werkzeugs, welches in der Lage ist, das gerade eingesetzte Drehmoment zu erfassen, ist es weiterhin möglich, daß der Anwender basierend auf dem aktuellen Drehmoment auch dazu aufgefordert wird, daß Drehmoment entsprechend zu erhöhen oder zu verringern.

Im folgenden werden Hintergrundinformationen zu Einsatzgebiet der Erfindung gegeben: Es geht dabei um eine anwendungsorientierte Anforderungsanalyse und Entwicklung von AR-basierten Systemen zur Unterstützung von Arbeitsprozessen in Entwicklung, Produktion und Service komplexer technischer Produkte und Anlagen in der Fertigungs- und Verfahrenstechnik, sowie für Systeme zur Serviceunterstützung wie bei Kraftfahrzeugen oder für die Wartung beliebiger technischer Geräte.

Augmented Reality, kurz AR, ist eine neue Art der Mensch-Technik-Interaktion mit großem Potential zur Unterstützung von industriellen Arbeitsprozessen. Bei dieser Technologie wird das Sichtfeld des Betrachters mit rechnergenerierten virtuellen Objekten angereichert, so daß Produkt- bzw. Prozeßinformationen intuitiv genutzt werden können. Neben der sehr einfachen Interaktion erschließt der Einsatz tragbarer Computer AR-Anwendungsfelder mit hohen Mobilitätsanforderungen, wenn beispielsweise Prozeß-, Meß- oder Simulationsdaten an das reale Objekt geknüpft werden.

Die Situation der deutschen Industrie ist durch steigende Kundenanforderungen an Individualität und Qualität der Produkte sowie durch eine wesentliche Zeitverkürzung der Entstehungsprozesse gekennzeichnet. Insbesondere in Entwicklung, Produktion und Service komplexer technischer Produkte und Anlagen können mit innovativen Lösungen für die Mensch-Technik-Interaktion sowohl Effizienz- und Produktivitätssprünge erzielt werden, als auch die Arbeit kompetenz- und lernförderlich gestaltet werden, indem der Wissens- und Informationsbedarf der Benutzer auf der Basis ohnehin vorliegender Daten situationsgerecht unterstützt wird.

Augmented Reality ist eine Technologie mit einer Vielzahl innovativer Anwendungsfelder:
- So kann z.B. in der **Entwicklung** ein "Mixed Mock-Up"-Ansatz auf der Grundlage einer gemischt-virtuellen Umgebung die frühen Entwicklungsphasen deutlich beschleunigen. Gegenüber immersiven, d.h. eintauchenden, "Virtual Reality"-(VR)-Lösungen besteht für den Benutzer ein wesentlicher Vorteil darin, daß die haptischen Eigenschaften mit Hilfe eines realen Modells naturgetreu abgebildet werden können, hingegen Aspekte der visuellen Wahrnehmung, z.B. für Anzeigenvarianten, virtuell manipulierbar sind. Darüber hinaus besteht ein großes Potential zur benutzerorientierten Validierung rechnergestützter Modelle, z.B. für die Bauteilverifikation oder bei Crash-Tests.
- In der flexiblen **Produktion** kann unter anderem das Einrichten von Maschinen für qualifizierte Facharbeiter wesentlich erleichtert werden, indem, z.B. durch mobile AR-Komponenten, gemischt-virtuelle Spannsituationen direkt im Sichtfeld wiedergegeben werden. Eine facharbeitergerechte Fertigungsplanung und Fertigungssteuerung in der Werkstatt wird erleichtert, wenn Informationen über den jeweiligen Auftragsstatus direkt in Verbindung mit den dazugehörigen Produkten vor Ort wahrgenommen werden. Das gleiche gilt auch für die Montage, wobei dem Monteur bereits in der Trainingsphase die einzelnen Arbeitsschritte gemischt-virtuell präsentierbar sind. In diesem Zusammenhang können, z.B. durch den Vergleich realer Montageabläufe mit Simulationsergebnissen, umfassende Optimierungen erreicht werden, die sowohl die Qualität der Arbeitsplanung verbessern als auch den Montageprozeß in der kritischen Anlaufphase vereinfachen und beschleunigen.
- Letztlich genügen im **Service** herkömmliche Technologien kaum mehr, um die komplexen Diagnose- und Behebungsprozeduren zu unterstützen und zu dokumentieren. Da diese Prozesse in vielen Bereichen aber ohnehin auf Basis von digitalen Daten geplant werden, bieten AR-Technologien die Möglichkeit, die Informationsquellen für die Wartung zu übernehmen und einem Techniker, z.B. in der Datenbrille, durch die Überlagerung mit realen Objekten den Ausbauvorgang zu erläutern. Mit Bezug auf kooperative Arbeit ermöglicht das AR-gestützte "Fernauge" eine verteilte Problemlösung, indem ein entfernter Experte mit dem Mitarbeiter vor Ort über globale Distanzen hinweg kommuniziert. Dieser Fall ist besonders für die überwiegend mittelständischen Werkzeugmaschinenhersteller relevant. Sie sind durch die Globalisierung gezwungen, Produktionsstätten ihrer Kunden weltweit zu errichten. Jedoch ist eine Präsenz von Niederlassungen in allen wichtigen Märkten weder aus wirtschaftlichen Gründen realisierbar, noch kann auf das profunde Wissen erfahrener Service-Mitarbeiter des Stammhauses bzgl. der zunehmend komplexer werdenden Anlagen verzichtet werden.

Die Besonderheit in der Mensch-Technik-Interaktion bei Augmented Reality liegt in einer sehr einfachen und intuitiven Kommunikation mit dem Computer, beispielsweise ergänzt durch multimodale Interaktionstechniken wie Sprachverarbeitung oder Gestikerkennung. Die Verwendung von tragbaren Computereinheiten ermöglicht darüber hinaus völlig neue mobile Nutzungsszenarien, wobei die spezifischen Daten jederzeit über ein drahtloses Netz angefordert werden können. Neue Visualisierungstechniken erlauben eine direkte Annotation, z.B. von Meß- oder Simulationsdaten, an das reale Objekt oder in die reale Umgebung. In Verbindung mit verteilten Anwendungen sind mehrere Benutzer in der Lage, in einer realen Umgebung mit Hilfe einer gemeinsamen Datenbasis zu arbeiten (shared augmented environments) oder in verschiedenen Umgebungen AR-gestützt zu kooperieren.

Augmented Reality wird erst seit wenigen Jahren intensiv erforscht. Deshalb finden sich sowohl auf nationaler als auch internationaler Ebene nur wenige Anwendungen, zumeist in Form von wissenschaftlichen Prototypen bei Forschungseinrichtungen.
- *USA:* Wie bei vielen neuen Technologien wurden die Nutzungspotentiale von Augmented Reality zuerst in Nordamerika erschlossen. Beispiele sind die Cockpitgestaltung oder die Wartung von mechatronischen Geräten. Der Flugzeughersteller Boeing hat bereits erste Feldversuche im Bereich der Montage mit AR-Technologien unternommen. Ergebnis ist, daß den USA auch in diesem Hightech-Bereich eine Schlüsselstellung zukommt, die mit einer möglichen Technologieführerschaft einhergeht.
- *Japan:* In Japan werden verschiedene AR-Entwicklungen vorangetrieben, z.B. zur gemischt-virtuellen Gebäudeplanung, Telepräsenz oder "Cyber-Shopping". Keimzelle ist das 1997 gegründete Mixed Reality Systems Laboratory, das als Kompetenzzentrum gemeinsam von Wirtschaft und Wissenschaft getragen wird. Besondere Impulse im Konsumgüterbereich sind zukünftig durch die japanische Industrie für Unterhaltungselektronik zu erwarten.
- *Europa:* In Europa sind bislang nur sehr wenige Forschergruppen im AR-Bereich tätig. Eine Gruppe an der Universität Wien befaßt sich mit Ansätzen für die gemischt-reale Visualisierung. Die Gruppe des IGD hat im Rahmen des inzwischen ausgelaufenen ACTS-Projektes CICC erste Anwendungen für die Bauindustrie und einen wissenschaftlichen Prototypen zur Mitarbeiterschulung im Automobilbau entwickelt.

Die im Erfindung versteht sich insbesondere im speziellen Kontext der Anwendungsfelder "Produktions- und Werkzeugmaschinen" (NC-gesteuerte, automatisierungstechnische Prozesse) sowie "Diagnose-/Serviceunterstützungssysteme für komplexe technische Komponenten/Geräte/Systeme" (z.B. Fahrzeuge, aber auch industrielle Maschinen und Anlagen).

Zusammenfassend betrifft die Erfindung somit ein System und ein Verfahren zur situationsgerechten Unterstützung der Interaktion mit Hilfe von Augmented-Reality-Technologien. Für eine optimierte Unterstützung insbesondere beim Systemaufbau, bei der Inbetriebsetzung bis hin zur Wartung von automatisierungstechnisch gesteuerten Systemen und Prozessen wird vorgeschlagen, daß eine konkrete Arbeitssituation automatisch erfaßt wird, daß die Arbeitssituation analysiert wird und daß aus statischen Informationen automatisch jeweils für die analysierte Arbeitssituation relevante Informationsdaten ausgewählt und angezeigt werden.

## Patentansprüche

1. System zur Dokumentationsverarbeitung zur situationsgerechten Unterstützung der Interaktion zwischen einem Anwender (7) und einer technischen Vorrichtung (A1..An), insbesondere für technische und industrielle Anwendungen, mit Speichermitteln (1) zur Speicherung von Dokumentationsdaten (I1..In) und mit als Bildaufnahmevorrichtung ausgebildeten Erfassungsmitteln (2) zur Erfassung von realen Informationen (R), mit Zugriffsmitteln (D) zum Zugriff auf die Dokumentationsdaten (I1..In) und mit Auswertemitteln (A) zur Auswertung der realen Information (R) und zur Auswahl der gespeicherten Dokumentationsdaten (I1..In) in Abhängigkeit der realen Informationen (R).

2. System nach Anspruch 1,
**dadurch gekennzeichnet,**
**daß** die Dokumentationsdaten (I1..In) statische und dynamische Informationsdaten sind.

3. System nach einem der Ansprüche 1 oder 2,
**dadurch gekennzeichnet,**
**daß** die Auswertemittel (A) zur Auswertung der realen Information (R) in der Weise vorgesehen sind, daß aus der realen Information ein Einsatzkontext, insbesondere ein Objekt der Dokumentationsdaten (I1..In) ermittelt wird und daß das System Visualisierungsmittel (B) zur Visualisierung der Dokumentationsdaten (I1..In) aufweist.

4. System nach einem der Ansprüche 1 bis 3,
**dadurch gekennzeichnet,**
**daß** die Erfassungsmittel (2) anwendergesteuert sind.

5. System nach einem der Ansprüche 3 bis 4,
**dadurch gekennzeichnet,**
**daß** die Visualisierungsmittel (4) als im Bereich von Brillengläsern einer Datenbrille angeordnete Anzeigevorrichtungen ausgebildet sind, dass als Erfassungsmittel (2) eine an der Datenbrille angeordnete Bilderfassungsvorrichtung vorgesehen ist und dass zur Erfassung von Sprachkommandos, ein an der Datenbrille angeordnetes Mikrofon (11) vorgesehen ist.

6. Verfahren zur Dokumentationsverarbeitung zur situationsgerechten Unterstützung der Interaktion zwischen einem Anwender (7) und einer technischen Vorrichtung (A1..An), insbesondere für technische und industrielle Anwendungen, bei dem Dokumentationsdaten (I1..In) gespeichert werden und reale Informationen (R) mit als Bildaufnahmevorrichtung ausgebildeten Erfassungsmitteln (2) erfaßt werden, bei dem auf die Dokumentationsdaten (I1..In) in der weise zugegriffen wird, daß die realen Information (R) ausgewertet werden und in Abhängigkeit der realen Informationen (R) die gespeicherten Dokumentationsdaten (I1..In ausgewählt werden.

7. Verfahren nach Anspruch 6,
**dadurch gekennzeichnet,**
**daß** die Dokumentationsdaten (I1..In) statische und dynamische Informationsdaten sind.

8. Verfahren nach einem der Ansprüche 6 oder 7,
**dadurch gekennzeichnet,**
**daß** aus der realen Information ein Einsatzkontext, insbesondere ein Objekt der Dokumentationsdaten (I1..In) ermittelt wird und daß die ermittelten Dokumentationsdaten (I1..In) über Visualisierungsmittel (B) visualisiert werden.

9. Verfahren nach einem der Ansprüche 6 bis 8,
**dadurch gekennzeichnet,**
**daß** die Erfassungsmittel (2) anwendergesteuert.

10. Verfahren nach Anspruch 8 oder 9,
**dadurch gekennzeichnet,**
**daß** die Visualisierungsmittel (4) als im Bereich von Brillengläsern einer Datenbrille angeordnete Anzeigevorrichtungen ausgebildet sind, dass als Erfassungsmittel (2) eine an der Datenbrille angeordnete Bilderfassungsvorrichtung vorgesehen ist und dass zur Erfassung von Sprachkommandos ein an der Datenbrille angeordnetes Mikrofon (11) vorgesehen ist.

## Claims

1. System for documentation processing for situation-relevant support for interaction between a user (7) and an engineering apparatus (A1..An), particularly for engineering and industrial applications, comprising storage means (1) for storing documentation data (I1..In) and comprising acquisition means (2) designed as a video recording device for acquiring real information (R), comprising access means (D) for accessing the documentation data (I1..In) and comprising analysis means (A) for evaluating the real information (R) and for selecting the stored documentation data (I1..In) as a function of the real information (R).

2. System according to Claim 1, **characterised in that** the documentation data (I1..In) is static and dynamic information data.

3. System according to one of Claims 1 or 2, **characterised in that** the analysis means (A) for evaluating the real information (R) are provided in such a way that a usage context, in particular an object of the documentation data (I1..In), is determined from the real information, and **in that** the system includes visualisation means (B) for visualising the documentation data (I1..In).

4. System according to one of Claims 1 to 3, **characterised in that** the acquisition means (2) are user-controlled.

5. System according to one of Claims 3 to 4, **characterised in that** the visualisation means (4) are designed as display devices disposed in the vicinity of eye pieces of data goggles, that an image recording device is disposed on the data goggles as acquisition means (2), and that a microphone (11) is disposed on the data goggles to detect speech commands.

6. Method of documentation processing for situation-relevant support for interaction between a user (7) and an engineering apparatus (A1..An), particularly for engineering and industrial applications, wherein documentation data (I1..In) is stored and real information (R) is acquired by means of acquisition means (2) designed as an image recording device, wherein the documentation data (I1..In) is accessed in such a way that the real information (R) is analysed and the stored documentation data (I1..In) is selected as a function of the real information (R).

7. Method according to Claim 6, **characterised in that** the documentation data (I1..In) is static and dynamic information data.

8. Method according to one of Claims 6 or 7, **characterised in that** a deployment context, in particular an object of the documentation data (I1..In), is determined from the real information, and **in that** the documentation data (I1..In) determined is visualised via visualisation means (B).

9. Method according to one of Claims 6 to 8, **characterised in that** the acquisition means (2) are user-controlled.

10. Method according to Claim 8 or 9, **characterised in that** the visualisation means (4) are designed as display devices disposed in the vicinity of eye pieces of data goggles, that an image recording device is disposed on the data goggles as acquisition means (2), and that a microphone (11) is disposed on the data goggles to detect speech commands.

## Revendications

1. Système de traitement de documentation pour assister conformément à la situation l'interaction entre un utilisateur (7) et un dispositif technique (A1 à An), notamment pour des applications techniques et industrielles, comprenant des moyens de mémorisation (1) pour mémoriser des données documentaires (I1 à In), des moyens d'acquisition (2) conçus comme dispositif d'enregistrement d'image pour acquérir des informations réelles (R), des moyens d'accès (D) pour accéder aux données documentaires (I1 à In) et des moyens d'évaluation (A) pour évaluer l'information réelle (R) et pour sélectionner les données documentaires mémorisées (I1 à In) en fonction des informations réelles (R).

2. Système selon la revendication 1, **caractérisé par le fait que** les données documentaires (I1 à In) sont des données d'information statiques et dynamiques.

3. Système selon l'une des revendications 1 ou 2, **caractérisé par le fait que** les moyens d'évaluation (A) pour évaluer l'information réelle (R) sont prévus de telle sorte qu'un contexte d'utilisation, notamment un objet des données documentaires (I1 à In), est déterminé à partir de l'information réelle et que le système comporte des moyens de visualisation (B) pour visualiser les données documentaires (I1 à In).

4. Système selon l'une des revendications 1 à 3, **caractérisé par le fait que** les moyens d'acquisition (2) sont commandés par l'utilisateur.

5. Système selon l'une des revendications 3 à 4, **caractérisé par le fait que** les moyens de visualisation (4) sont conçus comme des dispositifs d'affichage placés dans la zone de verres de lunettes de données, qu'un dispositif d'enregistrement d'image placé sur les lunettes de données est prévu comme moyen d'acquisition (2) et qu'un microphone (11) placé sur les lunettes de données est prévu pour l'acquisition de commandes vocales.

6. Procédé de traitement de documentation pour assister conformément à la situation l'interaction entre un utilisateur (7) et un dispositif technique (A1 à An), notamment pour des applications techniques et industrielles, dans lequel on mémorise des données documentaires (I1 à In), dans lequel on acquiert des informations réelles (R) avec des moyens d'acquisition (2) conçus comme dispositif d'enregistrement d'image et dans lequel on accède aux données documentaires (I1 à In) de manière à évaluer l'information réelle (R) et à sélectionner les données documentaires mémorisées (I1 à In) en fonction des informations réelles (R).

7. Procédé selon la revendication 6, **caractérisé par le fait que** les données documentaires (I1 à In) sont des données d'information statiques et dynamiques.

8. Procédé selon l'une des revendications 6 ou 7, **caractérisé par le fait qu'**on détermine un contexte d'utilisation, notamment un objet des données documentaires (I1 à In), à partir de l'information réelle et qu'on visualise les données documentaires déterminées (I1 à In) par l'intermédiaire de moyens de visualisation (B).

9. Procédé selon l'une des revendications 6 à 8, **caractérisé par le fait que** les moyens d'acquisition (2) sont commandés par l'utilisateur.

10. Procédé selon la revendication 8 ou 9, **caractérisé par le fait que** les moyens de visualisation (4) sont conçus comme des dispositifs d'affichage placés dans la zone de verres de lunettes de données, qu'un dispositif d'enregistrement d'image placé sur les lunettes de données est prévu comme moyen d'acquisition (2) et qu'un microphone (11) placé sur les lunettes de données est prévu pour l'acquisition de commandes vocales.
